# EUROPEAN PATENT APPLICATION

(11) **EP 2 891 535 A1**
(43) Date of publication of application: **08.07.2015**
(21) Application number: 13832439.7
(22) Date of filing: 30.07.2013
(51) Int. Cl.: B23B 1/00, B23B 5/00, B23B 21/00, B23B 27/02, F16C 19/18, F16C 33/64

(54) **TURNING METHOD AND TURNING DEVICE**

(30) Priority: 30.08.2012 JP 2012189974
(71) Applicant: NTN Corporation, Osaka-shi, Osaka 550-0003 (JP)
(72) Inventor: NISHIKI Taku, Iwata-shi Shizuoka 438-0037 (JP); SHIRAGA Hiroaki, Iwata-shi Shizuoka 438-0037 (JP)
(74) Representative: Mischung, Ralf
(86) International application number: PCT/JP2013/070643
(87) International publication number: WO 2014/034361

(57) **Abstract**

Provided are a turning method for enabling machining of double-row raceway surfaces (grooves) so as to highly precisely set a mutual PCD dimension error and a groove pitch (raceway surface pitch), and a turning device capable of such turning. The turning method and the turning device perform turning on respective raceway surfaces (2a, 3a) of an inner race (2) and an outer race (3) of a double-row bearing (1). The respective raceway surfaces of any one of the inner race (2) and the outer race (3) are subjected to simultaneous turning with a turning tool (10) including a plurality of cutting tools (11A, 11B). After that, a direction of the plurality of cutting tools (11A, 11B) of the turning tool (10) is changed, and the respective raceway surfaces (2a, 3a) of another one of the inner race (2) and the outer race (3) are subjected to simultaneous turning with the turning tool (10).

## Description

### Technical Field

The present invention relates to a turning method and a turning device.

### Background Art

In general, a bearing includes, as main components thereof, an inner race having an inner raceway surface formed in a radially outer surface thereof, an outer race having an outer raceway surface formed in a radially inner surface thereof, a plurality of balls interposed between the inner raceway surface of the inner race and the outer raceway surface of the outer race in a freely rollable manner, and a retainer arranged between the inner race and the outer race, for retaining the respective balls equiangularly.

In this bearing, the respective raceway surfaces of the inner race and the outer race are formed by turning. Incidentally, some bearings include balls serving as rolling elements arranged in double rows. When the bearing has double-row raceway surfaces, it is necessary to reduce a mutual error between a pitch dimension of the raceway surfaces (grooves) of the inner race and a pitch dimension of the raceway surfaces (grooves) of the outer race. In order to reduce the mutual error in groove pitch dimension, it is preferred to simultaneously perform the turning on the raceway surfaces (grooves) of the inner race and on the raceway surfaces (grooves) of the outer race. In this case, when a machining device described in Patent Literature 1 or the like is used, machining can be performed simultaneously on end surfaces of both of the components (the inner race and the outer race).

### Citation List

Patent Literature 1: JP 05-253701 A

### Summary of Invention

### Technical Problem

However, the raceway surfaces (grooves) of the inner race are formed in the radially outer surface, and the raceway surfaces (grooves) of the outer race are formed in the radially inner surface. Therefore, the directions of the machined surfaces are different from each other.

Therefore, hitherto, the turning cannot be performed simultaneously on the raceway surfaces (grooves) of the inner race and the raceway surfaces (grooves) of the outer race.

In view of the above, the present invention provides a turning method for enabling machining of double-row raceway surfaces (grooves) so as to highly precisely set a mutual PCD dimension error and a groove pitch (raceway surface pitch), and a turning device capable of such turning.

### Solution to Problem

According to one embodiment of the present invention, there is provided a turningmethod of performing turning on respective raceway surfaces of an inner race and an outer race of a double-row bearing, the turning method comprising: performing the turning simultaneously on the respective raceway surfaces of any one of the inner race and the outer race with a turning tool comprising a plurality of cutting tools; changing a direction of the plurality of cutting tools of the turning tool; and performing the turning simultaneously on the respective raceway surfaces of another one of the inner race and the outer race with the turning tool.

According to the turning method of one embodiment of the present invention, for example, after the simultaneous turning is performed for the respective raceway surfaces of the outer race with the turning tool, the direction of the cutting tools is changed, thereby enabling the turning simultaneously on the respective raceway surfaces of the inner race with those cutting tools. As a result, the turning for the respective raceway surfaces of the inner race is also finished. Moreover, conversely, after the simultaneous turning is performed for the respective raceway surfaces of the inner race, the direction of the cutting tools is changed, thereby enabling the turning simultaneously on the respective raceway surfaces of the outer race with those cutting tools.

It is preferred that the cutting tools be prevented from being detached until the turning is finished on the respective raceway surfaces of the inner race and the outer race. With this, an arrangement pitch of the plurality of (such as two) cutting tools can be maintained to be constant for the inner race and the outer race. The changing of the direction of the plurality of cutting tools of the turning tool can comprise inverting the turning tool by 180 degrees.

A bearing inner race of one embodiment of the present invention is constructed by the turning performed through the turning method. Further, a bearing outer race of one embodiment of the present invention is constructed by the turning performed through the turning method. Further, a bearing of one embodiment of the present invention comprises: a bearing inner race constructed by the turning performed through the turning method; and a bearing outer race constructed by the turning performed through the turning method.

According to one embodiment of the present invention, there is provided a turning device for performing turning on respective raceway surfaces of an inner race and an outer race of a double-row bearing, the turning device comprising: a turning comprising a plurality of cutting tools for performing the turning simultaneously on the respective raceway surfaces of any one of the inner race and the outer race; and a change mechanism for changing a direction of the plurality of cutting tools of the turning tool, thereby enabling simultaneous turning for the respective raceway surfaces of another one of the inner race and the outer race.

The turning device according to one embodiment of the present invention enables the simultaneous turning for the respective raceway surfaces of the outer race with the cutting tools of the turning tool. When the turning for the respective raceway surfaces of the outer race is finished, the direction of the cutting tools is changed via the change mechanism, and the turning can simultaneously be performed on the respective raceway surfaces of the inner race with those cutting tools. As a result, the turning for the respective raceway surfaces of the inner race is also finished. Moreover, conversely, after the simultaneous turning is performed for the respective raceway surfaces of the inner race, the direction of the cutting tools is changed, thereby enabling the turning simultaneously on the respective raceway surfaces of the outer race with those cutting tools.

It is preferred that the turning device further comprise a radial adjustment mechanism for enabling an adjustment of the plurality of cutting tools of the turning tool in a raceway surface radial direction. Further, it is preferred that the turning device further comprise a pitch adjustment mechanism for enabling an adjustment of the plurality of cutting tools of the turning tool in a raceway surface arrangement pitch.

### Advantageous Effects of Invention

According to one embodiment of the present invention, the same turning tool can be used to perform the turning on the double-row raceway surfaces of the inner race and the double-row raceway surfaces of the outer race, and, moreover, the mutual error between the raceway surface pitch of the inner race and the raceway surface pitch of the outer race can be reduced, to thereby form a high-quality product. Particularly when the cutting tools are prevented from being detached until the turning for the respective raceway surfaces of the inner race and the outer race is finished, the arrangement pitch of the plurality of (such as two) cutting tools can be maintained to be constant for the inner race and the outer race, to thereby enable more precise machining.

In addition, the raceway surfaces are respectively machined at the same time on the inner race and the outer race, and hence an influence of changes over time during the machining (thermal deformations of the device and/or the workpieces such as the inner race and the outer race) is less liable to be generated. Thus, a mutual PCD dimension error and a groove pitch (pitch between the raceway surfaces) between the double rows can be highly precisely machined.

Moreover, if radially protruded amounts of the plurality of cutting tools are set when the turning is performed on the raceway surfaces of the outer race (or the inner race), the radially protruded amounts of the cutting tools need not be adjusted when the turning is performed on the raceway surfaces of the inner race (or the outer race). As a result, operability becomes excellent, and the mutual PCD dimension error between the double rows can be sufficiently decreased. When the change in the direction of the cutting tools of the turning tool is an inversion of the turning tool by 180 degrees, controllability and the operability become excellent.

The inner race and the outer race subjected to the turning through the above-mentioned turning method are high-quality products, and a bearing using the inner race and the outer race as described above is thus a high-quality product and is stable as a bearing.

When the radial adjustment mechanism and the pitch adjustment mechanism are provided, fine adjustments in radial positions of the cutting tools, the arrangement pitch amount of the cutting tools, and the like are enabled, and a more precise turning can thus be performed.

### Brief Description of Drawings

FIG. 1 is a main part schematic diagram illustrating a turning device according to an embodiment of the present invention in a state in which turning is performed on an outer race.
FIG. 2 is a main part schematic diagram illustrating the turning device according to the embodiment of the present invention in a state in which the turning is performed on an inner race.
FIG. 3 is a schematic block diagram illustrating the turning device according to the embodiment of the present invention.
FIG. 4 is a cross sectional view of a bearing comprising the outer race and the inner race subjected to the turning by the turning device.
FIG. 5 is a flowchart illustrating a turning method according to the embodiment of the present invention.

### Description of Embodiment

A description is now given of an embodiment of the present invention referring to the drawings.

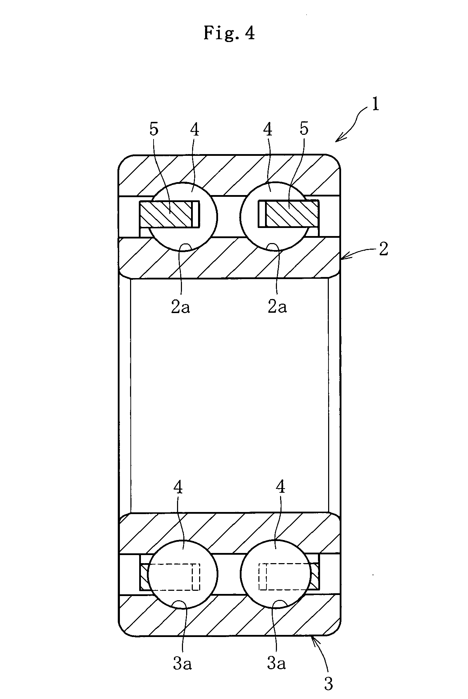

FIG. 4 illustrates a bearing 1 comprising an inner race 2 and an outer race 3 subjected to turning through a turning method according to the present invention. The bearing 1 comprises, as main components thereof, the inner race 2 having double-row inner raceway surfaces 2a and 2a (in this case, two rows) in a radially outer surface thereof, the outer race 3 being arranged outside the inner race 2 and having double-row outer raceway surfaces 3a and 3a (in this case, two rows) in a radially inner surface thereof, balls 4 serving as a plurality of rolling elements interposed between the inner raceway surfaces 2a and 2a of the inner race 2 and the outer raceway surfaces 3a and 3a of the outer race 3 in a freely rollable manner, and retainers 5 and 5 each arranged between the inner race 2 and the outer race 3, for retaining the respective balls 4 equiangularly.

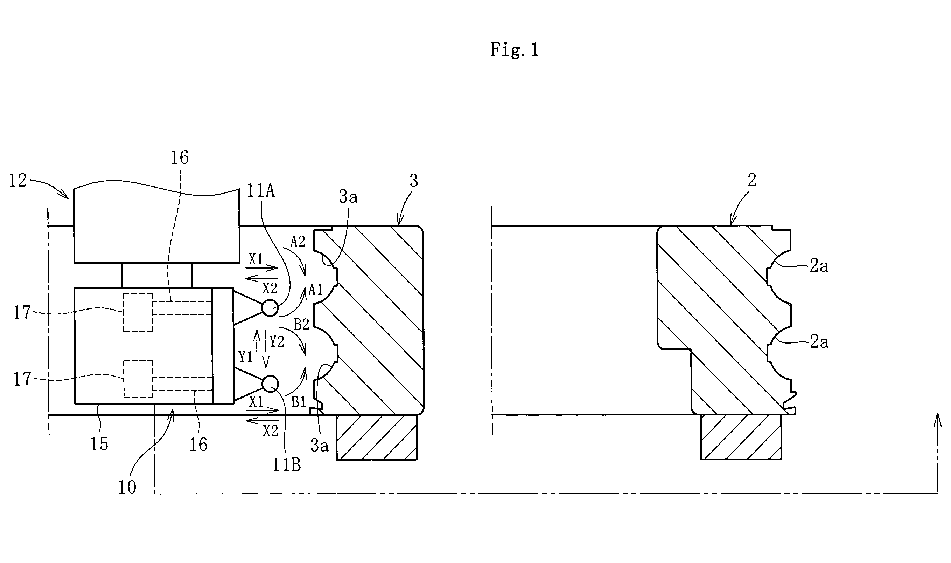

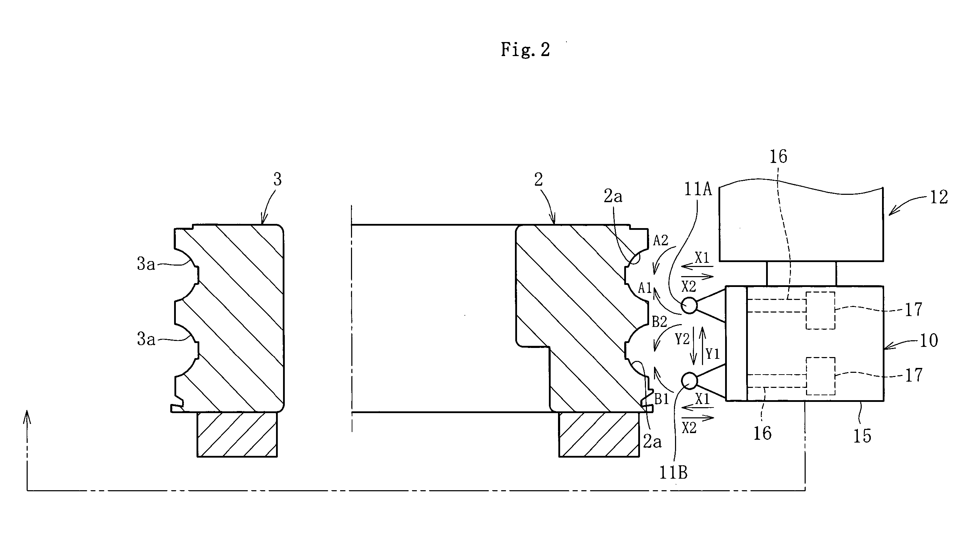

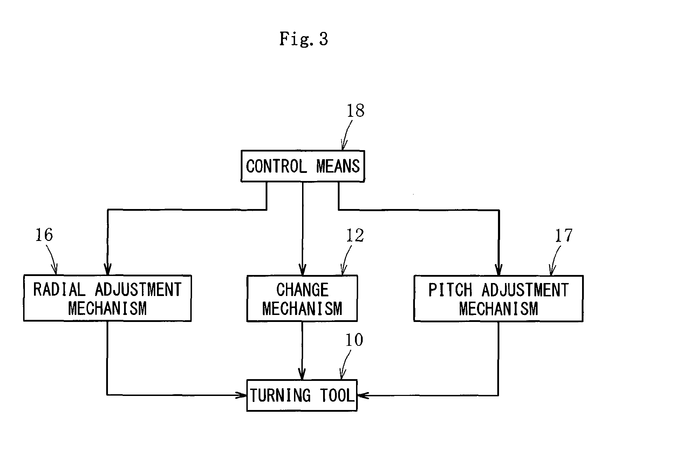

The turning method according to the present invention uses a turning tool 10 as illustrated in FIGS. 1 and 2. The turning tool comprises a plurality of (in this case, a pair of) cutting tools 11A and 11B. Moreover, the turning tool 10 can change a direction of the cutting tools 11A and 11B of the turning tool 10 via a change mechanism 12 illustrated in FIG. 3. Specifically, the change mechanism 12 can change the direction of the turning tool 10 between a state in which the turning can be performed on the raceway surfaces 3a and 3a of the outer race 3 as illustrated in FIG. 1 and a state in which the turning can be performed on the raceway surfaces 2a and 2a of the inner race 2 as illustrated in FIG. 2.

The turning tool 10 comprises a tool body 15, the cutting tools 11A and 11B mounted to the tool body 15, a radial adjustment mechanism 16 for enabling an adjustment of the cutting tools 11A and 11B in a raceway surface radial direction, and a pitch adjustment mechanism 17 for enabling an adjustment of the cutting tools 11A and 11B in an arrangement pitch of the raceway surface. Moreover, the turning tool 10 is held on a cutter holder (not shown).

The radial adjustment mechanism 16 can be constructed by, for example, a mechanism that allows the cutting tools 11A and 11B to reciprocate in directions represented by the arrows X1 and X2, for example, a reciprocating mechanism such as a cylinder mechanism, a ball nut mechanism, and a linear motor mechanism. In this case, as illustrated in FIG. 3, the radial adjustment mechanism 16 is controlled by control means 18. However, a mechanism enabling a manual adj ustment may be employed as the radial adj ustment mechanism 16. In this case, a more precise adjustment can be performed by using a block gauge or the like.

The pitch adjustment mechanism 17 reciprocates the cutting tool 11 (such as 11A) in directions represented by the arrows Y1 and Y2 orthogonal to the directions represented by the arrows X1 and X2. In this case, the pitch adjustment mechanism 17 can be constructed by a reciprocating mechanism such as a cylinder mechanism, a ball nut mechanism, and a linear motor mechanism as in the radial adjustment mechanism 16. Also in this case, as illustrated in FIG. 3, the pitch adjustment mechanism 16 is controlled by the control means 18.

The control means 18 is, for example, a microcomputer in which, around a central processing unit (CPU), a read only memory (ROM), a random access memory (RAM), and the like are connected with each other via a bus. The control means 18 inputs various types of data from a storage device serving as storage means. The storage device comprises a hard disk drive (HDD), a digital versatile disk (DVD) drive, a compact disc-recordable (CD-R) drive, an electronically erasable and programmable read only memory (EEPROM), or the like. Note that, the ROM stores programs executed by the CPU and data.

The change mechanism 12 can be constructed by a curvic coupling or the like mounted to the cutter holder. The change mechanism 12 can be controlled by the control means 18. Specifically, as illustrated in FIG. 1, the change mechanism 12 can set the respective cutting tools 11A and 11B of the tool body 15 to a state in which the outer race 3, which has an end surface (axial end surface) on one side fixed with a magnet chuck or the like, can be subjected to the turning for the raceway surfaces 3a and 3a of the outer race 3. Moreover, the change mechanism 12 can set the respective cutting tools 11A and 11B of the tool body 15 from the state illustrated in FIG. 1 to the state illustrated in FIG. 2, namely, a state in which the inner race 2, which has an end surface (axial end surface) on one side fixed with a magnet chuck or the like, can be subjected to the turning for the raceway surfaces 2a and 2a of the inner race 2. Moreover, the change mechanism 12 may be constructed by an XYZθ stage, a robot arm, or the like.

Referring to FIGS. 1, 2, and 5, a description is now given of a method of performing, by using the turning device constructed as described above, the turning on the raceway surfaces 2a and 2a of the inner race 2 and the raceway surfaces 3a and 3a of the outer race 3 of the bearing 1 as illustrated in FIG. 4. In this case, first, as illustrated in FIG. 1, a description is given of the case in which the turning is performed on the raceway surfaces 3a and 3a of the outer race 3.

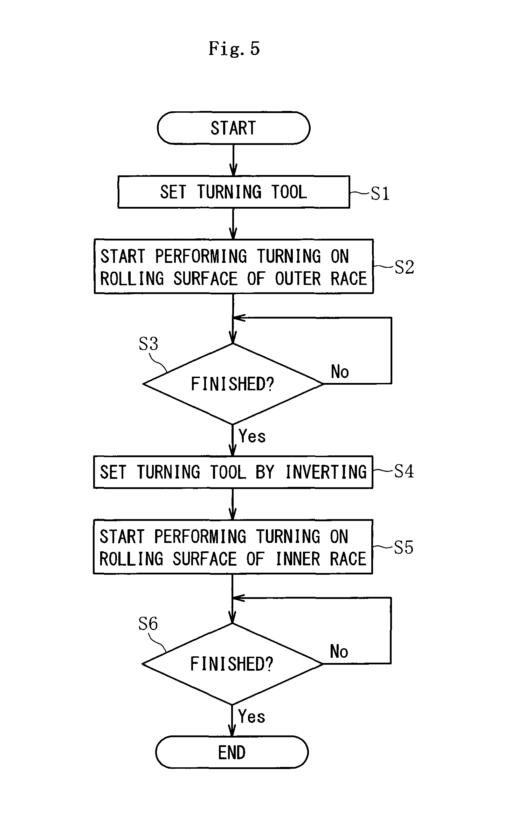

For this purpose, first, the change mechanism 12 is driven, to thereby set the respective cutting tools 11A and 11B of the tool body 15 illustrated in FIG. 1 to the state in which the turning can be performed on the raceway surfaces 3a and 3a (Step S1 in FIG. 5). Specifically, the respective cutting tools 11A and 11B are adjusted in the X1 and X2 directions by the radial adjustment mechanism 16, and are adjusted in the Y1 and Y2 directions by the pitch adjustment mechanism 17. Then, the method proceeds to Step S2, and starts the turning for the raceway surfaces 3a and 3a of the outer race 3. Specifically, the respective cutting tools 11A and 11B are moved in directions indicated by the arrows A1, B1, A2, and B2, and, simultaneously, the outer race 3 is rotated about an axis thereof. As a result, the turning can be performed on the raceway surfaces 3a and 3a of the outer race 3.

Then, the method proceeds to Step S3, and determines whether the turning for the raceway surfaces 3a and 3a of the outer race 3 is finished or not. Specifically, the turning is performed until the turning for the raceway surfaces 3a and 3a is finished. Then, when the turning is finished, the turning tool 10 is inverted to set to the state illustrated in FIG. 2 (Step S4). In this case, the adjustment of the respective cutting tools 11A and 11B in the X1 and X2 directions by the radial adjustment mechanism 16, and the adjustment of the respective cutting tools 11A and 11B in the Y1 and Y2 directions by the pitch adjustment mechanism 17 are not performed.

Then, the method proceeds to Step S5, and starts the turning for the raceway surfaces 2a and 2a of the inner race 2. Specifically, the respective cutting tools 11A and 11B are moved in the directions indicated by the arrows A1, B1, A2, and B2, and, simultaneously, the inner race 2 is rotated about an axis thereof. As a result, the turning can be performed on the raceway surfaces 2a and 2a of the inner race 2.

Then, the method proceeds to Step S6, and determines whether the turning for the raceway surfaces 2a and 2a of the inner race 2 is finished or not. Specifically, the turning is performed until the turning for the raceway surfaces 2a and 2a is finished. Then, when the turning is finished, the turning operation is finished.

According to the present invention, the same turning tool 10 can be used to perform the turning on the double-row raceway surfaces 2a of the inner race 2 and the double-row raceway surfaces 3a of the outer race 3, and, moreover, a mutual error between a raceway surface pitch of the inner race 2 and a raceway surface pitch of the outer race 3 can be reduced, to thereby forma high-quality product. Particularly if the cutting tools are not detached until the turning for the respective raceway surfaces 2a and 3a of the inner race 2 and the outer race 3 is finished, the arrangement pitch of the plurality of (such as two) cutting tools 11A and 11B is maintained to be constant for the inner race 2 and the outer race 3, to thereby enable more precise machining.

In addition, the raceway surfaces 2a and 2a and 3a and 3a are respectively machined at the same time on the inner race 2 and the outer race 3, and hence an influence of changes over time during the machining (thermal deformations of the device and/or the workpieces such as the inner race 2 and the outer race 3) is less liable to be generated. Thus, a mutual PCD dimension error and a groove pitch (pitch between the raceway surfaces) between the double rows can be highly precisely machined.

Moreover, if radially protruded amounts of the plurality of cutting tools (directions represented by the arrows X1 and X2) are set when the turning is performed on the raceway surfaces 3a and 3a of the outer race 3 as in the above-mentioned embodiment, the radially protruded amounts of the cutting tools 11A and 11B need not be adjusted when the turning is performed on the raceway surfaces 2a and 2a of the inner race 2. As a result, operability becomes excellent, and the mutual PCD dimension error between the double rows can be sufficiently decreased.

When the change in the direction of the cutting tools 11A and 11B of the turning tool 10 is an inversion of the turning tool by 180 degrees, controllability and the operability become excellent.

The inner race 2 and the outer race 3 subjected to the turning through the above-mentioned turning method are high-quality products, and the bearing 1 using the inner race 2 and the outer race 3 as described above is thus a high-quality product and is stable as a bearing.

If a curvic coupling is used for the change mechanism 12, even when the turning tool 10 is inverted (changed), precision of a tilt of the cutting tool 10 and the like hardly changes, and highly-precise turning can be performed.

A description has been given of the embodiment of the present invention, but the present invention is not limited to the above-mentioned embodiment, and can be modified in various ways. According to the above-mentioned embodiment, the turning is first performed on the raceway surfaces 3a and 3a of the outer race 3, and, after this turning, the turning is performed on the raceway surfaces 2a and 2a of the inner race 2. However, the turning may first be performed on the raceway surfaces 2a and 2a of the inner race 2, and, after this turning, the turning may be performed on the raceway surfaces 3a and 3a of the outer race 3. Moreover, the number of the rows of the raceway surfaces 2a and 3a of the inner and outer races 2 and 3 is not limited to two, and the number of the rows may be three or more.

Both the cutting tools 11A and 11B are moved for the adjustment of the cutting tools 11A and 11B in the directions represented by the arrows Y1 and Y2 in the above-mentioned embodiment, but only any one of the cutting tools 11A and 11B may be moved.

### Industrial Applicability

Provided are the turning method and the turning device that perform the turning on the respective raceway surfaces of the inner race and the outer race of the bearing. The number of the raceway surfaces of the bearing is not limited to two, and may be three or more. The turning is performed with a turning tool comprising as many cutting tools as the rows of the raceway surfaces of the bearing to be subjected to the turning.

### Reference Signs List

- 1: bearing
- 2: inner race
- 2a: raceway surface
- 3: outer race
- 3a: raceway surface
- 10: turning tool
- 11A, 11B: cutting tool
- 12: change mechanism
- 16: radial adjustment mechanism
- 17: pitch adjustment mechanism

## Claims

1. A turning method of performing turning on respective raceway surfaces of an inner race and an outer race of a double-row bearing, the turning method comprising:
performing the turning simultaneously on the respective raceway surfaces of any one of the inner race and the outer race with a turning tool comprising a plurality of cutting tools;
changing a direction of the plurality of cutting tools of the turning tool; and
performing the turning simultaneously on the respective raceway surfaces of another one of the inner race and the outer race with the turning tool.

2. The turning method according to claim 1, wherein the plurality of cutting tools are prevented from being detached until the turning is finished on the respective raceway surfaces of the inner race and the outer race.

3. The turning method according to claim 1 or 2, wherein the changing of the direction of the plurality of cutting tools of the turning tool comprises inverting the turning tool by 180 degrees.

4. A bearing inner race, which is constructed by the turning performed through the turning method of any one of claims 1 to 3.

5. A bearing outer race, which is constructed by the turning performed through the turning method of any one of claims 1 to 3.

6. A bearing, comprising:
an inner race constructed by the turning performed through the turning method of any one of claims 1 to 3; and
an outer race constructed by the turning performed through the turning method of any one of claims 1 to 3.

7. A turning device for performing turning on respective raceway surfaces of an inner race and an outer race of a double-row bearing, the turning device comprising:
a turning tool comprising a plurality of cutting tools for performing the turning simultaneously on the respective raceway surfaces of any one of the inner race and the outer race; and
a change mechanism for changing a direction of the plurality of cutting tools of the turning tool, thereby enabling simultaneous turning for the respective raceway surfaces of another one of the inner race and the outer race.

8. The turning device according to claim 7, further comprising a radial adjustment mechanism for enabling an adjustment of the plurality of cutting tools of the turning tool in a raceway surface radial direction.

9. The turning device according to claim 7, further comprising a pitch adjustment mechanism for enabling an adjustment of the plurality of cutting tools of the turning tool in a raceway surface arrangement pitch.
